# FASCICULE DE BREVET EUROPEEN

(11) **EP 0 887 574 B1**
(45) Date de publication et mention de la délivrance du brevet: **17.09.2003**
(21) Numéro de dépôt: 98401501.6
(22) Date de dépôt: 18.06.1998
(51) Int. Cl.: F16F 13/26

(54) **Système de commande d'un support hydroélastique**
Regelungssystem für hydroelastisches Lager
Control system for hydroelastic support

(30) Priorité: 26.06.1997 FR 9708045
(43) Date de publication de la demande: 30.12.1998
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, 35410 Domloup (FR)
(74) Mandataire: Habasque, Etienne Joel Jean-François

(56) Documents cités:
- EP-A- 0 490 717
- EP-A- 0 490 718
- EP-A- 0 569 271
- DE-A- 2 737 985

## Description

La présente invention concerne un support hydroélastique destiné à être interposé entre deux ensembles à suspendre l'un par rapport à l'autre.

Plus particulièrement, l'invention se rapporte à un support de ce type destiné à être interposé entre un moteur ou groupe motopropulseur de véhicule automobile et le reste de la structure ou châssis de celui-ci pour suspendre ce moteur dans le véhicule.

Des supports hydroélastiques de ce type ont déjà été décrits dans les documents FR-A-2 364 373 et FR-A-2 670 261 (EP-A-0 490 717).

Un tel support hydroélastique comprend généralement deux armatures reliées respectivement aux deux ensembles à suspendre, c'est-à-dire au moteur et au reste du véhicule, ces deux armatures étant réunies par une masse de matériau élastomère.

De plus, ce support comporte au moins une chambre de travail délimitée au moins en partie par la masse de matériau élastomère et une chambre d'expansion, ces deux chambres étant remplies de liquide et étant reliées entre elles par un passage de communication.

Dans un tel support, la chambre de travail est également délimitée en partie par une cloison mobile en matériau élastique, dont la face extérieure comporte un poussoir avec lequel coopère un dispositif d'entraînement de cette cloison mobile pour appliquer à cette dernière des déplacements commandés, de manière à créer dans la chambre de travail, des forces de pression synchrones avec des harmoniques des vibrations de fonctionnement du moteur.

Plus particulièrement, ces forces de pression sont synchrones avec les harmoniques d'ordre 2 des vibrations d'excitation provenant de ce moteur.

En fait, le but de ces dispositifs est de créer à l'intérieur d'un tel support assurant la liaison du moteur au reste de la structure du véhicule, des efforts qui s'opposent aux efforts engendrés par les déplacements relatifs du moteur par rapport au reste de la structure du véhicule, indépendamment de leur origine.

Ce support engendre alors des forces en synchronisme avec celles développées par le moteur et son fonctionnement nécessite un apport d'énergie extérieure.

Ce type de support est en fait une application particulière au bourdonnement d'ordre 2 de moteurs à quatre cylindres en ligne avec suspension pendulaire.

De très nombreux véhicules sont équipés de ce type de moteurs.

Le but de l'invention est donc de proposer un système de commande synchrone d'un tel support. Cette commande moins coûteuse qu'une commande de support actif piloté en amplitude et en phase, est une solution compatible avec la suspension pendulée des moteurs, dans laquelle les supports se trouvent dans le plan vertical contenant l'axe anti-roulis. En sachant que l'excitation se fait à amplitude constante, et est indépendante du régime et de la charge de fonctionnement du moteur, on peut alors définir un support à activation synchrone comme cela a été décrit dans les documents mentionnés précédemment.

A cet effet, l'invention a pour objet un support hydroélastique destiné à être interposé entre un moteur de véhicule automobile et le reste de la structure de celui-ci, pour suspendre ce moteur dans le véhicule, comportant deux armatures reliées respectivement au moteur et au reste du véhicule, ces deux armatures étant réunies par une masse de matériau élastomère, le support comportant au moins une chambre de travail délimitée au moins en partie par la masse de matériau élastomère, et une chambre d'expansion, ces deux chambres étant remplies de liquide et reliées entre elles par un passage de communication et dans lequel la chambre de travail est également délimitée en partie par une cloison mobile en matériau élastique, dont la face extérieure comporte un poussoir avec lequel coopère un dispositif d'entraînement de la cloison mobile pour appliquer à cette dernière des déplacements commandés de manière à créer dans la chambre de travail, des forces de pression synchrones avec les harmoniques des vibrations de fonctionnement du moteur, caractérisé en ce que le dispositif d'entraînement de la cloison mobile du support comporte un moteur électrique à courant continu dont l'arbre de sortie est relié au poussoir de cette cloison mobile par des moyens d'entraînement de celle-ci selon un mouvement linéaire alternatif et en ce qu'il comporte des moyens d'asservissement de ce moteur électrique, en vitesse et en position angulaire, sur un signal de cycle de fonctionnement du moteur.

L'invention sera mieux comprise à l'aide de la description qui va suivre, donnée uniquement à titre d'exemple et faite en se référant aux dessins annexés, sur lesquels :
- la Fig.1 représente un schéma synoptique en coupe illustrant la structure et le fonctionnement d'un support hydroélastique entrant dans la constitution d'un système de commande selon l'invention;
- la Fig.2 représente une vue en coupe d'un exemple de réalisation d'un tel support hydroélastique; et
- la Fig.3 représente un schéma synoptique illustrant un exemple d'un système de commande selon l'invention.

On reconnaît en effet sur ces figures, un support hydroélastique désigné par la référence générale 1.

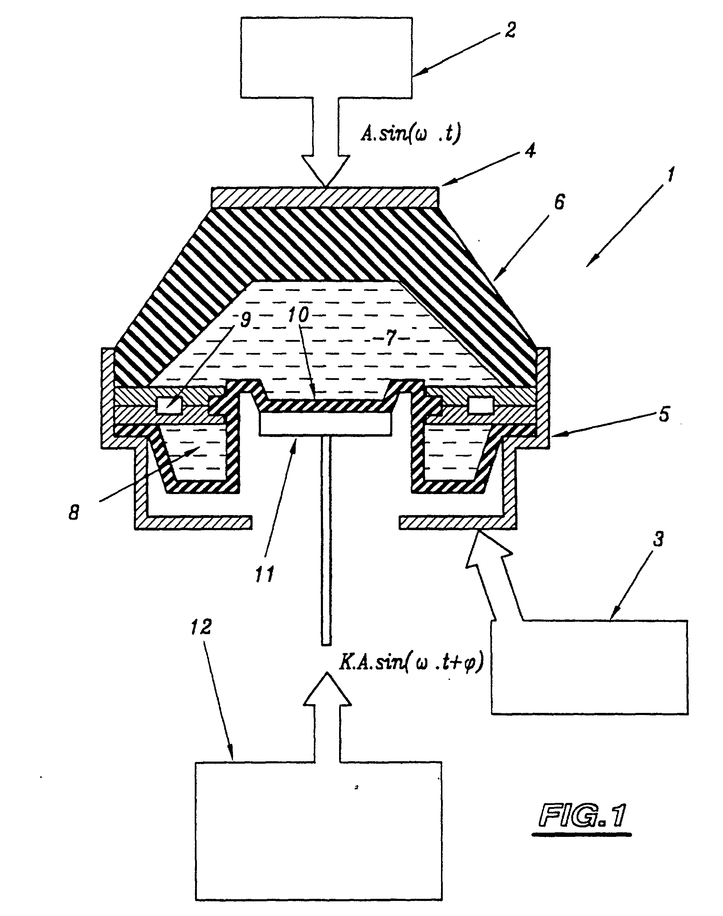

Ce support présente une structure analogue à celles des supports décrits dans les documents mentionnés précédemment, et est adapté pour être interposé entre deux ensembles à suspendre l'un par rapport à l'autre, et plus particulièrement pour être interposé entre un moteur ou groupe motopropulseur désigné par la référence générale 2 sur la figure 1, d'un véhicule automobile, et le reste de la structure ou châssis de ce véhicule, désigné par la référence générale 3.

Un tel support désigné par la référence générale 1 comporte deux armatures désignées par les références générales 4 et 5 sur cette figure 1, reliées respectivement au moteur et au reste du véhicule, ces deux armatures étant réunies par une masse de matériau élastomère désignée par la référence générale 6.

De plus, le support comporte au moins une chambre de travail 7 délimitée au moins en partie par la masse de matériau élastomère 6 et une chambre d'expansion 8, ces deux chambres étant remplies de liquide et étant reliées entre elles par un passage de communication 9.

Dans ce type de support, la chambre de travail 7 est également délimitée en partie par une cloison mobile 10 en matériau élastique, dont la face extérieure comporte un poussoir 11, avec lequel coopère un dispositif d'entraînement désigné par la référence générale 12, de cette cloison mobile, pour appliquer à cette dernière des déplacements commandés de manière à créer dans la chambre de travail 7, des forces de pression synchrones avec les harmoniques des vibrations de fonctionnement du moteur.

Ce support hydroélastique reprend donc la définition des supports décrits dans les documents mentionnés précédemment concernant la disposition des chambres de travail et d'expansion et du passage de communication assurant la liaison entre ces deux chambres, formant ainsi une colonne et permettant d'amortir le mode de hachis.

Par ailleurs, ce support reprend également le principe du clapet, mais dans le système selon l'invention, celui-ci est associé à un système actif synchrone à l'excitation du moteur avec une relation de phase constante par rapport au vilebrequin de celui-ci.

Dans ce cas, il convient de filtrer les vibrations du moteur liées au cycle thermodynamique de celui-ci et aux inerties des masses en mouvement alternatif par exemple entre 30 et 200 Hertz, c'est-à-dire que le support hydroélastique permet de réduire, voire d'annuler, le phénomène dit de bourdonnement dans l'habitacle du véhicule.

Il convient alors d'adopter une solution consistant en la génération dans le support, de vibrations opposées à celles du moteur du véhicule, par apport d'énergie extérieure, c'est-à-dire par activation synchrone d'un clapet par un système de commande qui sera décrit plus en détail par la suite.

Pour cela, on dispose donc du support synchrone, qui, grâce au mouvement de va et vient du système clapet-piston du support, imprimé par le dispositif d'entraînement, va pulser en phase et à amplitude constante, du fluide à l'intérieur de la chambre de travail 7.

Comme cela sera décrit plus en détail par la suite, ce pilotage se fait par l'intermédiaire d'un moteur électrique à courant continu commandé par un système de boucle à verrouillage de phase.

Si l'on part d'une perturbation vibratoire du moteur du véhicule, de forme Xₛ = A sin(ω.t), il convient d'engendrer un déplacement linéaire de la cloison du support, de forme Xₚ = K.A sin(ω.t).

Comme on l'a indiqué précédemment, l'amplitude vibratoire, c'est-à-dire la perturbation, étant constante, on peut alors apporter la correction suivant le même principe.

De plus, le système selon l'invention utilise en guise d'actionneur un moteur électrique rotatif à courant continu, associé par exemple à un mécanisme à bielle-manivelle qui transforme le mouvement de rotation de l'arbre de sortie de ce moteur en mouvement linéaire alternatif du poussoir et donc de la cloison mobile du support.

L'amplitude du débattement du piston du support est fixée en fonction de l'amplitude de la perturbation du moteur du véhicule et de la section de piston du support.

Par une méthode de calcul par éléments finis, il est possible de déterminer la section de piston équivalente du support.

En connaissant l'amplitude vibratoire du moteur du véhicule, il est alors possible de calculer de façon classique, la quantité de fluide transférée dans le support et de déterminer la compensation nécessaire en enlevant cette même quantité par l'intermédiaire du clapet piloté du support.

Il convient alors de reproduire la fréquence et la phase du signal excitatoire en pilotant la vitesse de rotation et la position angulaire du moteur électrique.

Ainsi, il n'y a plus qu'à suivre la phase de la vibration perturbatrice et non la vibration elle-même.

On sait que les calculateurs de contrôle de fonctionnement des moteurs de véhicule fournissent un signal de cycle ou phase de fonctionnement de celui-ci, c'est-à-dire correspondant au point mort haut de celui-ci, à un déphasage constant et connu de celui-ci, de sorte qu'il ne reste plus qu'à asservir la correction à ce signal.

Il suffit pour cela d'exploiter ce signal en tant que consigne, pour lui asservir le moteur électrique, tant en vitesse qu'en position angulaire.

Ceci est par exemple réalisé en mettant en oeuvre une boucle à verrouillage de phase.

Il n'est donc plus nécessaire d'avoir recours à la mesure du déplacement.

On ne reviendra pas sur les équations de fonctionnement bien connues d'un tel moteur électrique qui permettent de déterminer sa commande.

Un tel moteur électrique doit être capable de tourner à une vitesse maximale double de celle du moteur du véhicule, soit environ par exemple 12000 t/mn, ou tourner à la même vitesse mais dans ce cas, il est nécessaire de doubler l'activation par un couplage par pignon ou courroie.

Ceci correspond à une fréquence maximale de 200 Hertz.

La partie électronique de commande assure la synchronisation entre le passage du point mort haut (PMH = point de référence du cycle moteur) du moteur à explosion avec la position haute du piston de ce support.

L'information relative au moteur du véhicule est de façon générale, un signal périodique à fréquence variable. Sa forme est en créneau et le signal est fourni par le calculateur de contrôle de fonctionnement de ce moteur, dont la période correspond à l'harmonique 2 des vibrations de fonctionnement de celui-ci et dont le déphasage Δϕ par rapport au point de référence est une constante connue.

A cet effet, ce calculateur peut par exemple être associé à des moyens de détection constitués par exemple par un capteur de type inductif, d'une cible positionnée en bout de vilebrequin.

Le signal issu de ce capteur est remis en forme de façon électronique pour obtenir un signal logique. La sortie répond à une impulsion par demi-tour de moteur (vilebrequin).

De plus, on dispose en sortie du moteur électrique, c'est-à-dire par exemple sur l'arbre de sortie de celui-ci qui commande le mouvement du piston du support, des moyens de mesure de sa position angulaire.

Ces moyens peuvent par exemple comporter un codeur optique ou magnétique qui délivre des impulsions.

Les moyens d'entraînement du système selon l'invention, c'est-à-dire le système par exemple à bielle - manivelle, est monté de manière qu'une impulsion de position de ce moteur électrique soit déphasée de Δϕ par rapport au passage en position haute dans le cycle de fonctionnement du moteur du véhicule.

Dans ces conditions, on peut atteindre l'objectif de commande en calant la phase angulaire mesurée du moteur électrique sur celle du signal fourni par le calculateur de contrôle du fonctionnement du moteur du véhicule.

Un circuit de pilotage permet de réaliser cette opération suivant un principe qui sera décrit plus en détail par la suite.

En fait, ce circuit présente une structure classique à boucle de verrouillage de phase dans laquelle la phase du signal de sortie du calculateur de contrôle de fonctionnement du moteur constitue la valeur de consigne.

L'ensemble constitué par le moteur électrique et son codeur de position angulaire, représente le système à piloter et un filtre passe-bas associé à un amplificateur de puissance peut être utilisé en tant que correcteur.

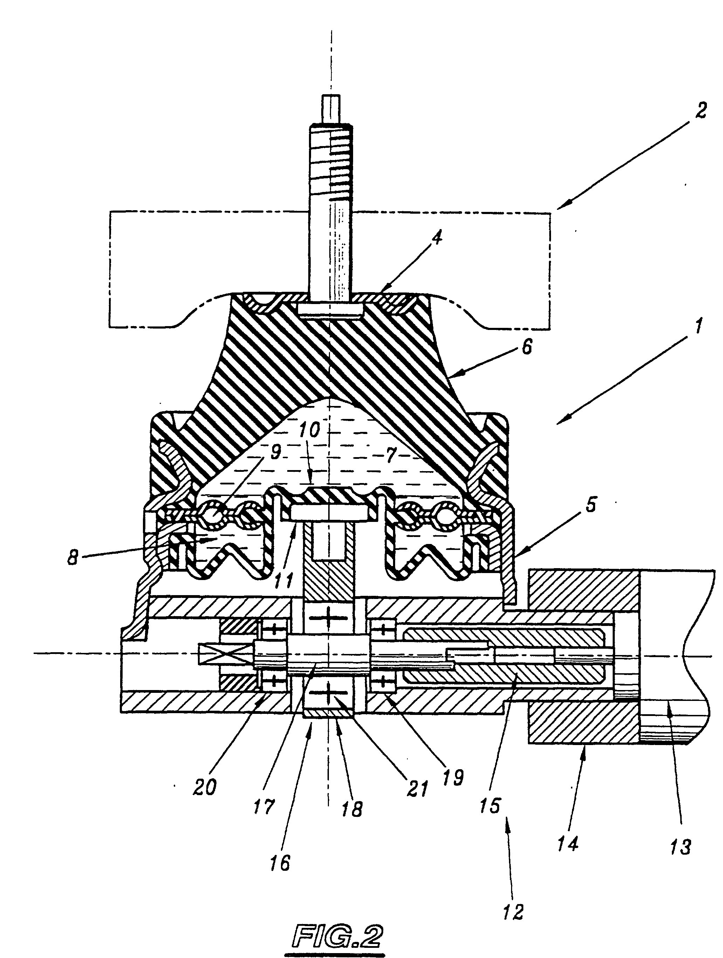

On reconnaît ainsi sur la figure 2, le support hydroélastique 1 avec ses armatures 4 et 5, la masse de matériau élastomère 6, la chambre de travail 7, la chambre d'expansion 8, le passage de communication 9, la cloison mobile 10, le poussoir 11 et le dispositif d'entraînement 12.

Comme cela a été indiqué précédemment, ce dispositif d'entraînement comporte un moteur électrique rotatif à courant continu désigné par la référence générale 13 sur cette figure.

Ce moteur peut comporter comme cela a été indiqué précédemment, un codeur de position angulaire intégré délivrant un signal impulsionnel.

Ce moteur est disposé dans des moyens de support quelconques désignés par la référence générale 14 sur cette figure 2 et l'arbre de sortie de celui-ci comporte des moyens de liaison désignés par la référence générale 15 à un système à bielle-manivelle désigné par la référence générale 16 sur cette figure.

C'est ainsi par exemple que cet arbre de sortie du moteur électrique est relié à une bielle désignée par la référence générale 17 autour de laquelle est disposée une extrémité d'une manivelle désignée par la référence générale 18 dont l'autre extrémité est associée au poussoir 11 de la cloison mobile 10 du support.

Des paliers de guidage respectivement 19,20 et 21 sont disposés de part et d'autre de ce mécanisme à bielle-manivelle et entre la bielle et la manivelle.

On conçoit alors que la commande de ce moteur rotatif permet d'appliquer par l'intermédiaire de ce mécanisme à bielle-manivelle, des forces de pression dans la chambre de travail du support.

A cet effet, le fonctionnement du moteur électrique est asservi en vitesse et en position angulaire sur un signal de cycle de fonctionnement du moteur.

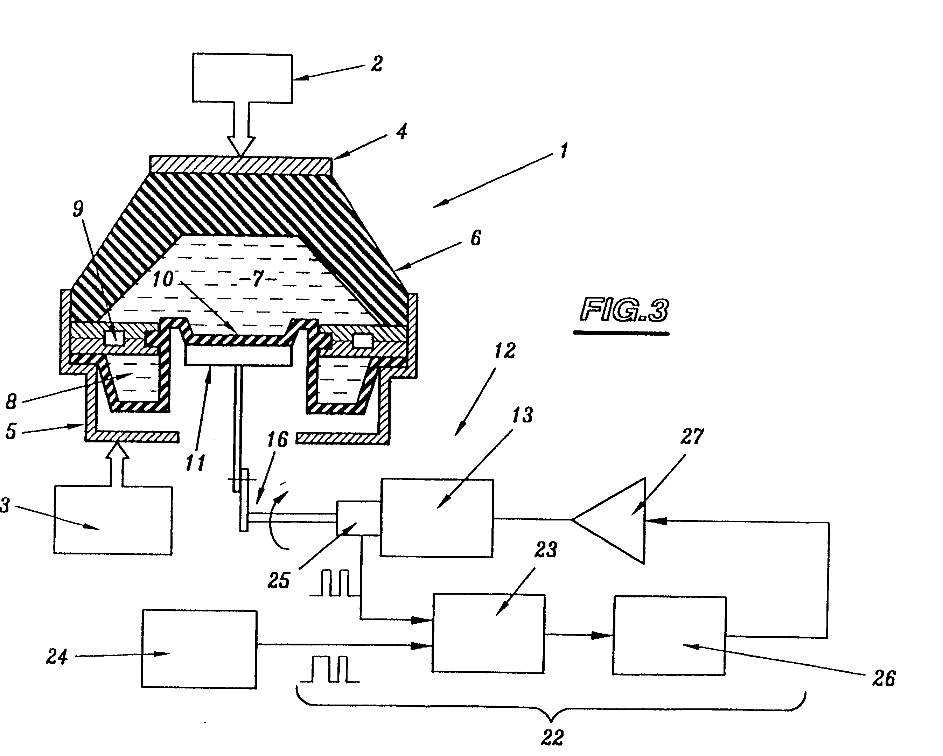

Ceci est illustré sur la figure 3, dans laquelle on reconnaît le support hydroélastique 1 et les moyens d'entraînement 12 reliés au poussoir 11 de la cloison mobile 10 de celui-ci.

Comme cela a été indiqué précédemment, ces moyens d'entraînement comportent le moteur électrique 13 à courant continu dont l'arbre de sortie est relié par le mécanisme, par exemple à bielle-manivelle 16, à ce poussoir 11 de la cloison mobile 10 du support.

En fait, les moyens d'asservissement du fonctionnement de ce moteur comprennent une boucle à verrouillage de phase désignée par la référence générale 22 sur cette figure 3, comportant un comparateur de phase désigné par la référence générale 23, recevant en entrée, en tant que consigne, un signal de cycle de fonctionnement du moteur issu par exemple d'un calculateur de contrôle de fonctionnement de celui-ci, désigné par la référence générale 24 et un signal de position angulaire du moteur électrique, délivré par exemple par un codeur de position 25, associé à l'arbre de sortie de celui-ci ou autre.

Le signal d'erreur de sortie de ce comparateur de phase 23 est relié à un filtre passe-bas désigné par la référence générale 26, dont la sortie est reliée à l'entrée de moyens d'amplification désignés par la référence générale 27, pour assurer la commande de l'alimentation du moteur à courant continu 13.

On conçoit alors qu'il est possible de reproduire la fréquence et la phase du signal excitatoire du moteur du véhicule en pilotant la vitesse de rotation et la position angulaire de ce moteur électrique ce qui permet de suivre la phase de cette vibration perturbatrice.

Il va de soi bien entendu que différents modes de réalisation de ce système de commande peuvent être envisagés.

## Revendications

1. Support hydroélastique (1) destiné à être interposé entre un moteur (2) de véhicule automobile et le reste de la structure (3) de celui-ci, pour suspendre ce moteur dans le véhicule, comportant deux armatures (4,5) reliées respectivement au moteur (2) et au reste du véhicule (3), ces deux armatures étant réunies par une masse de matériau élastomère (6), le support comportant en outre au moins une chambre de travail (7) délimitée au moins en partie par la masse de matériau élastomère (6), et une chambre d'expansion (8), ces deux chambres étant remplies de liquide et reliées entre elles par un passage de communication (9) et dans lequel la chambre de travail (7) est également délimitée en partie par une cloison mobile (10) en matériau élastique, dont la face extérieure comporte un poussoir (11) avec lequel coopère un dispositif d'entraînement (12) de la cloison mobile pour appliquer à cette dernière des déplacements commandés de manière à créer dans la chambre de travail (7), des forces de pression synchrones avec les harmoniques des vibrations de fonctionnement du moteur, **caractérisé en ce que** le dispositif d'entraînement (12) de la cloison mobile (10) du support comporte un moteur électrique à courant continu (13) dont l'arbre de sortie est relié au poussoir (11) de cette cloison mobile (10) par des moyens d'actionnement (16) selon un mouvement linéaire alternatif et **en ce qu'**il comporte des moyens (22) d'asservissement de ce moteur électrique (13), en vitesse et en position angulaire, sur un signal de cycle de fonctionnement du moteur (24).

2. Support selon la revendication 1, **caractérisé en ce que** les moyens d'asservissement comprennent une boucle à verrouillage de phase (22) recevant en entrée, en tant que consigne, le signal (24) de cycle de fonctionnement du moteur et un signal (25) de position angulaire du moteur électrique (13).

3. Support selon la revendication 2, **caractérisé en ce que** le signal de cycle de fonctionnement du moteur est délivré par un calculateur de contrôle de fonctionnement de celui-ci (24).

4. Support selon la revendication 2 ou 3, **caractérisé en ce que** le signal de position angulaire du moteur électrique (13) est délivré par un capteur (25) associé à l'arbre de sortie de celui-ci.

5. Support selon l'une quelconque des revendications 2 à 4, **caractérisé en ce que** la boucle à verrouillage de phase comporte des moyens (23) de comparaison des signaux pour délivrer un signal d'erreur et des moyens de filtrage (26) et d'amplification (27) de celui-ci pour piloter le moteur électrique (13).

6. Support selon l'une quelconque des revendications précédentes, **caractérisé en ce que** les moyens d'actionnement de la cloison mobile (11) du support (10) comportent un mécanisme à bielle-manivelle (16).

## Patentansprüche

1. Hydroelastisches Lager (1) für den Einbau zwischen einem Motor (2) eines Kraftfahrzeugs und der übrigen Fahrzeugstruktur (3) desselben zur Aufhängung dieses Motors in dem Fahrzeug, mit zwei Beschlagteilen (4, 5), welche jeweils mit dem Motor (2) und der übrigen Fahrzeugstruktur (3) verbunden sind, wobei diese zwei Beschlagteile untereinander durch eine Füllmasse aus Elastomermaterial (6) verbunden sind, wobei das Lager außerdem wenigstens eine Arbeitskammer (7) aufweist, welche wenigstens zum Teil durch die Füllmasse aus Elastomermaterial (6) abgegrenzt ist und eine Ausdehnungskammer (8) aufweist, und wobei diese zwei Kammern mit einer Flüssigkeit gefüllt und untereinander mittels eines Verbindungskanals (9) verbunden sind, und bei welchem die Arbeitskammer (7) auch zum Teil durch eine bewegliche Trennwand (10) aus elastischem Material begrenzt ist, von welcher die außen liegende Fläche einen Stößel (11) umfasst, mit dem eine Antriebseinheit (12) dieser beweglichen Trennwand, zur Aufbringung von geregelten Verschiebungen auf diese letztere derart zusammenwirkt, dass in der Arbeitskammer (7) Druckkräfte erzeugt werden, welche mit den Harmonischen der Schwingungen des Motorlaufs synchron sind, **dadurch gekennzeichnet, dass** die Antriebseinheit (12) der beweglichen Trennwand des Lagers (10) einen elektrischen Gleichstrommotor (13) aufweist, dessen Abtriebswelle an den Stößel (11) dieser beweglichen Trennwand über Antriebsmittel (16) in Übereinstimmung mit einer wechselnden Linearbewegung angelenkt ist, und dass sie Mittel (22) zur Anpassung dieses Elektromotors in Geschwindigkeit und Winkelposition an ein Signal des Betriebszyklus des Motorlaufs (24) aufweist.

2. Lager nach Anspruch 1, **dadurch gekennzeichnet, dass** die Mittel zur Anpassung eine Phasen-Nachlaufsynchronisation (22) aufweisen, welche an ihrem Eingang als Sollwert das Signal (24) des Betriebszyklus des Motorlaufs und ein Signal (25) der Winkelposition des Elektromotors (13) erhält.

3. Lager nach Anspruch 2, **dadurch gekennzeichnet, dass** das Signal des Betriebszyklus des Motorlaufs von einem Regelcomputer desselben (24) bereitgestellt wird.

4. Lager nach Anspruch 2 oder 3, **dadurch gekennzeichnet, dass** das Signal der Winkelposition des Elektromotors (13) von einem Positionsgeber (25) geliefert wird, der mit der Abtriebswelle des Elektromotors verbunden ist.

5. Lager nach einem oder mehreren der Ansprüche 2 bis 4, **dadurch gekennzeichnet, dass** die Phasen-Nachlaufsynchronisation Mittel (23) zum Vergleich der Signale zur Erzeugung eines Korrektursignals, und Mittel zur Filterung (26) und Verstärkung (27) desselben zur Steuerung des Elektromotors (13) aufweist.

6. Lager nach einem der vorhergehenden Ansprüche, **dadurch gekennzeichnet, dass** die Antriebsmittel der beweglichen Trennwand (10) des Lagers (1) einen Kurbeltrieb (16) enthalten.

## Claims

1. Hydroelastic support (1), which is designed to be interposed between an engine (2) of a motor vehicle and the remainder of the structure (3) of the latter, in order to suspend this engine in the vehicle, comprising two armatures (4, 5) which are connected respectively to the engine (2) and to the remainder of the vehicle (3), these two armatures being connected by a mass of elastomer material (6), the support additionally comprising at least one work chamber (7) which is delimited at least partially by the mass of elastomer material (6), and an expansion chamber (8), these two chambers being filled with fluid and connected to one another by a communication passage (9), and wherein the work chamber (7) is also partially delimited by a mobile partition (10) made of elastomer material, the outer surface of which comprises a thruster (11) with which a drive device (12) of the mobile partition co-operates in order to apply controlled displacements to the latter such as to create in the work chamber (7) pressure forces which are synchronous with the harmonics of the running vibrations of the engine, **characterised in that** the drive device (12) of the mobile partition (10) of the support comprises a direct current electric motor (13), the output shaft of which is connected to the thruster (11) of this mobile partition (10) by means for actuation (16) according to reciprocating linear motion, and **in that** it comprises means (22) for automatic control of the speed and angular position of the electric motor (13), when a cycle signal for running of the engine (24) is given.

2. Support according to claim 1, **characterised in that** the automatic control means comprise a phase locking loop (22) which receives as input, as an order, the cycle signal (24) for running of the engine, and an angular position signal (25) for the electric motor (13).

3. Support according to claim 2, **characterised in that** the cycle signal for running of the engine is provided by a computer for control of the running of the latter (24).

4. Support according to claim 2 or claim 3, **characterised in that** the angular position signal for the electric motor (13) is provided by a sensor (25) which is associated with the output shaft of the latter.

5. Support according to any one of claims 2 to 4, **characterised in that** the phase locking loop comprises means (23) for comparison of the signals in order to provide an error signal and means for filtering (26) and amplification (27) of the latter in order to pilot the electric motor (13).

6. Support according to any one of the preceding claims, **characterised in that** the means for actuation of the mobile partition (11) of the support (10) comprise a connecting rod - crank mechanism (16).
